Europäisches Patentamt

European Patent Office

Office européen des brevets

(19)

(11) Veröffentlichungsnummer : **0 387 572 B1**

(12)

# EUROPÄISCHE PATENTSCHRIFT

(45) Veröffentlichungstag der Patentschrift :
**16.06.93 Patentblatt 93/24**

(51) Int. Cl.$^5$ : **C09C 1/24**, C01G 49/02

(21) Anmeldenummer : **90103636.8**

(22) Anmeldetag : **25.02.90**

(54) **Verfahren zur Herstellung von Eisenoxidgelb-Pigmenten.**

(30) Priorität : **11.03.89 DE 3907917**

(43) Veröffentlichungstag der Anmeldung :
**19.09.90 Patentblatt 90/38**

(45) Bekanntmachung des Hinweises auf die
Patenterteilung :
**16.06.93 Patentblatt 93/24**

(84) Benannte Vertragsstaaten :
**DE ES FR GB IT NL**

(56) Entgegenhaltungen :
**DE-A- 3 326 632**
**DE-A- 3 716 300**
**DE-C- 540 198**
**US-A- 1 327 061**
**US-A- 1 368 748**

(73) Patentinhaber : **BAYER AG**
**W-5090 Leverkusen 1 Bayerwerk (DE)**

(72) Erfinder : **Kröckert, Bernd, Dr.**
**Brauerstrasse 14**
**W-4230 Wesel (DE)**
Erfinder : **Printzen, Helmut, Dr.**
**Heckschenstrasse 93**
**W-4150 Krefeld 1 (DE)**
Erfinder : **Biermann, Hans-Peter, Dr.**
**Bethelstrasse 52**
**W-4150 Krefeld 1 (DE)**
Erfinder : **Höfs, Hans-Ulrich, Dr.**
**Buschstrasse 149**
**W-4150 Krefeld 1 (DE)**

EP 0 387 572 B1

## Beschreibung

Die vorliegende Erfindung betrifft ein Verfahren zur Herstellung von Eisenoxidgelb-Pigmenten mit niedrigem Silking-Effekt, wobei die Keimbildung von nadelförmigen $\alpha$-FeOOH-Gelbpigmenten in Gegenwart von Verbindungen der Elemente B, Al, Ga, Si, Ge, Sn oder Pb in Mengen von 0,05 bis 10 Gew.-%, berechnet als 3- oder 4-wertige Oxide, und bezogen auf das bei der Keimbildung ausgefällte $\alpha$-FeOOH, vorgenommen wird und man auf dem Gelbkeim ein Eisenoxidgelb-Pigment aufwachsen läßt.

Nicht silkende Eisenoxidgelb-Pigmente sind aus der DE-A 3 326 632 bekannt. Durch die Herstellung des Keims mit der nötigen Menge an Fremdionen ist es möglich, eine Verwachsung der üblicherweise nadelförmigen Goethitpartikel zu erzielen. Die Vervielfältigung des zunächst hergestellten Keims erfolgt bei erhöhter Temperatur. Gemäß der DE-A 3 716 300 werden besonders gute Pigmente erhalten, wenn während der ersten Vervielfältigungsfaktoren (VVF) eine pH-Stufenfahrweise im Fällverfahren durchgeführt wird. Der VVF ist eine dimensionslose Zahl, die die Vervielfachung der als Keim eingesetzten FeOOH-Menge beschreibt.

Beim Fällverfahren werden Eisen(II)-Salzlösungen unter Einwirkung von gasförmigen Oxidationsmitteln mit soviel Alkali versetzt, daß ein saurer pH-Bereich erhalten bleibt.

Der Pigmentaufbau ist grundsätzlich nach dem Fällverfahren, dem Penniman-Verfahren und dem Anilinverfahren möglich (Ullmanns Encyklopädie der technischen Chemie, 4. Auflage, 1979, Seite 602). Allerdings konnten nach dem Fällverfahren bisher nur helle und gesättigte Pigmente hergestellt werden, die koloristisch den Handelsprodukten der Bayer AG Bayferrox® AC 5075 oder 920 entsprechen.

Beim Penniman-Verfahren werden Eisen(II)-Ionen durch Begasung mit Luftsauerstoff zu Eisen(III)-Ionen oxidiert. Die Eisen(III)-Ionen hydrolisieren an der Keimoberfläche, hierdurch erfolgt der Pigmentaufbau und Protonen werden freigesetzt. Die Protonen lösen das vorgelegte Eisen unter Bildung von Eisensulfat auf. Da im Verfahren das $FeSO_4$ nur katalytisch wirkt, ist der Prozeß für die Pigmentherstellung immer anzustreben, da hier nicht wie beim Fällverfahren die äquimolare Menge von Natriumsulfat anfällt und so die Salzlast reduziert werden kann.

Als Maßzahl für die Verringerung der Salzlast kann folgender Zusammenhang angenommen werden:

$$\frac{\text{Mol } FeSO_4 - \text{Mol } FeOOH}{\text{Mol } FeSO_4} = \text{a. oder b.}$$

a. Null beim Fällverfahren

b. kleiner Null beim Penniman-Zoph-Prozeß

Es bedeuten:

Mol $FeSO_4$: Zahl der Mole $FeSO_4$ pro Liter, die nach der Keimbildung zur Suspension gegeben werden.

Mol FeOOH: Zahl der Mole FeOOH pro Liter, die nach der Keimbildung entstehen.

Dies bedeutet, daß beim Fällverfahren die Verringerung der Salzlast immer gleich Null ist. Für übliche Verfahrensbedingungen im Penniman-Zoph-Prozeß, wie in US-A 1 327 061 und US-A 1 368 748 beschrieben, ist der Zahlenwert kleiner Null und verdeutlicht damit die Verringerung der anfallenden Salzmenge.

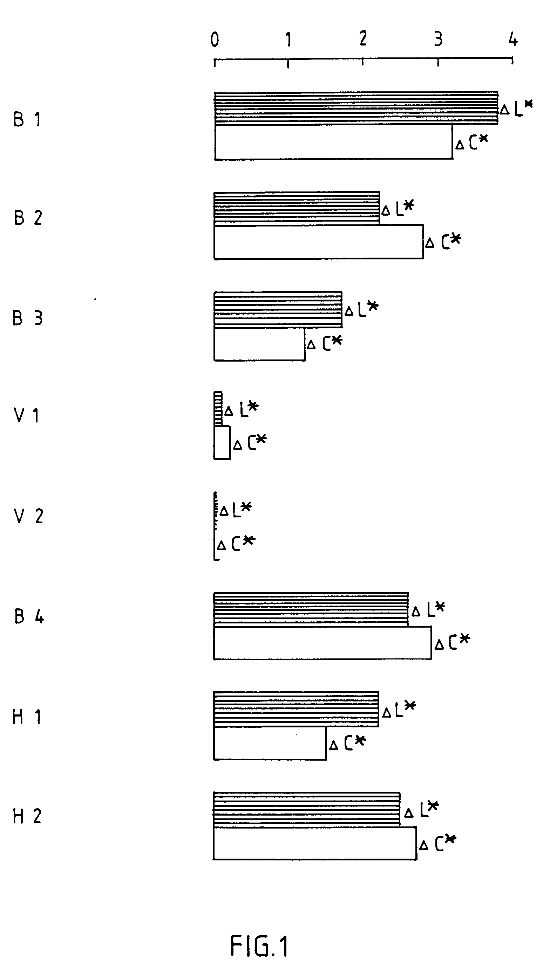

Um eine weitere Reduktion der Salzfracht zu ermöglichen, sollten sphärolithische Pigmente nach dem Penniman-Verfahren hergestellt werden. Wählt man die in DE-A 3 326 632 beschriebenen Keime für den Pigmentaufbau, so war es bisher nicht möglich, Pigmente mit ausreichender Helligkeit und Sättigung herzustellen (Vergleichsbeispiel 2 und Fig. 1).

Aufgabe dieser Erfindung ist es nunmehr, ein Verfahren zur Verfügung zu stellen, was die beschriebenen Nachteile nicht aufweist.

Überraschenderweise gelang dies, wenn man als Ausgangsmaterial im Penniman-Zoph-Prozeß nicht silkende Keime, die nach dem Fällverfahren bis zu Vervielfältigungsfaktoren (VVF) bis 7 aufgebaut wurden, verwendet.

Gegenstand dieser Erfindung ist somit ein Verfahren zur Herstellung von Eisenoxidgelb-Pigmenten mit niedrigem Silking-Effekt, wobei die Keimbildung von nadelförmigen $\alpha$-FeOOH-Gelbpigmenten in Gegenwart von Verbindungen der Elemente B, Al, Ga, Si, Ge, Sn oder Pb in Mengen von 0,05 bis 10 Gew.-%, berechnet als 3- oder 4-wertige Oxide und bezogen auf das bei der Keimbildung ausgefällte $\alpha$-FeOOH, vorgenommen wird und man auf dem Gelbkeim ein Eisenoxidgelb-Pigment aufwachsen läßt, welches dadurch gekennzeichnet ist, daß das Aufwachsen bis zu einem Vervielfältigungsfaktor (VVF) von 2,5 bis 7, vorzugsweise von 4 bis 6, zunächst nach dem Fällverfahren und anschließend nach dem Penniman-Verfahren durchgeführt wird.

Bevorzugt wird das erfindungsgemäße Verfahren so durchgeführt, daß bei Beginn des Penniman-Verfahrens 10 bis 100 g/l FeOOH, vorzugsweise 30 bis 80 g/l FeOOH, das nach dem Fällverfahren erhalten wurde, vorliegen. Besonders gute Ergebnisse werden dann erreicht, wenn die Konzentration an $FeSO_4$ während des Aufwachsens beim Penniman-Verfahren 10 bis 80 g/l $FeSO_4$, bevorzugt 20 bis 60 g/l, beträgt.

Die erreichbare Reduktion der Salzlast ist abhängig vom Vervielfältigungsfaktor, bei dem der Penniman-

2

Prozeß beginnt. Wie den nachfolgenden Beispielen zu entnehmen ist, liegen überall für die Salzlastverminderung negative Kennzahlen vor und veranschaulichen damit den Effekt der Kombination aus Fäll- und Penniman-Verfahren.

Besonders gute koloristische Ergebnisse werden dann erreicht, wenn nach Abschluß des Penniman-Verfahrens die Reaktionssuspension ohne Begasung bei der Reaktionstemperatur 0,5 bis 20 h, bevorzugt 1 bis 10 h, gerührt wird.

In den nachfolgenden Beispielen und Fig. 1 sind die Helligkeit $\Delta L^*$ und Sättigung $\Delta C^*$ der Produkte aus den Beispielen (B 1, B 2, B 3, B 4), dem Vergleichsbeispiel (V 1) und den Handelsprodukten der Bayer AG Bayferrox® 920 (H 1) und AC 5075 (H 2) als Deltawerte gegen ein Produkt dargestellt, bei dem ein Keim gemäß DE-A 3 326 632, ohne weiteren Pigmentaufbau nach dem Fällverfahren, im Penniman-Zoph-Prozeß zum Pigment aufgebaut wurde (V 2).

Die Farbtöne aller Proben sind in Alkydal F 48, Handelsprodukt der Bayer AG, einem mittelöligen Alkydharz, bei einer Pigmentvolumenkonzentration von 10 % gemäß DIN 6174 (äquivalent ISO DIN 7724, 1 - 3 drafts) ermittelt.

Positive Werte für $\Delta L^*$, Helligkeit, und $\Delta C^*$, Sättigung, bedeuten eine koloristische Verbesserung des Pigmentes.

Die Bestimmung der Ölzahlen erfolgte gemäß DIN 53 199.

Nachfolgend wird die Erfindung beispielhaft beschrieben, worin jedoch keine Einschränkung zu sehen ist.

Beispiel 1

Die Keimbildung und der Pigmentaufbau nach dem Fällverfahren, hier bis Vervielfältigungsfaktor 5,5, erfolgte nach DE-A 3 716 300, Beispiel 4. 62,0 m³ techn. $FeSO_4$-Lösung (c = 201,0 g $FeSO_4$/l) und 2215 l techn. $Al_2(SO_4)_3$-Lösung (c = 1,00 Mol/l) wurden unter Rühren auf 30°C aufgeheizt. Nach dem Aufheizen wurden 9,40 m³ techn. Natronlauge (c = 9,50 Mol/l) zugepumpt und bei gleichzeitiger Steigerung der Temperatur bis auf 45°C so lange unter Rühren mit 700 m³ Luft/h oxidiert, bis der pH-Wert $\leq$ 3,8 betrug.

Zu 36,0 m³ dieser Gelbkeimsuspension werden 80 m³ Wasser hinzugefügt und dann auf 75°C geheizt. Nach der Aufheizung fiel der pH-Wert auf $\leq$ 3,0. Anschließend werden bei 75°C unter Rühren und Begasung mit 700 m³ Luft/h in ca. 16 Stunden 26,0 m³ Natronlauge techn. (c = 5,00 Mol/l) und 37,0 m³ techn. $FeSO_4$-Lösung (c = 201,0 g $FeSO_4$/l) so zudosiert, daß der pH-Wert in der Suspension um 0,1 bis 0,2 Einheiten pro Stunde bis pH = 3,8 steigt, dann konstant 4,0 ± 0,2 betrug.

Während des Pigmentaufbaus wurde bei einer Vervielfachung des Keims um 1,9 (Vergleichsbeispiel 2), 2,8 (Beispiel 3), 4,1 (Beispiel 2) und 5,5, dieses Beispiel, Proben entnommen und nach dem Penniman-Verfahren aufgebaut.

Hierzu wird ein 6-l-Edelstahlkessel mit Eisenschrott (90 g/l), der FeOOH-Suspension (77 g/l) und Eisen-II-sulfat (40 g/l) gefüllt. Nach dem Aufheizen bei 85°C wird mit Luft begast (600 l/h). Es erfolgt eine Vervielfältigung des Keims von 5,5 auf 11,7. Das nach den üblichen Labormethoden filtrierte und salzfrei gewaschene Pigment wird anschließend im Umlufttrockenschrank bei 120°C getrocknet. Der koloristische Vergleich mit dem Produkt, das erhalten wird, wenn der Keim vorher nicht nach dem Fällverfahren aufgebaut wurde, Vergleichsbeispiel 2, zeigt deutlich, daß wesentlich hellere und gesättigtere Pigmente gebildet werden.

Farbwerte nach Pigmentaufbau bis VVF 11,7 durch Kombination aus Fäll- und Penniman-Verfahren, Penniman-Verfahren ab VVF 5,5 im Vergleich zu Pigmentaufbau ab VVF 1:

|  | $\Delta L^*$ | $\Delta a^*$ | $\Delta b^*$ | $\Delta C^*$ | $\Delta h$ |
|---|---|---|---|---|---|
| Delta B 1 zu V 1 | +3,8 | -1,2 | +3,2 | +3,2 | +2,5 |

Die positiven Zahlenwerte für Helligkeit $\Delta L^*$ und Sättigung $\Delta C^*$ verdeutlichen die Verbesserung.

Die Ölzahl des Pigmentes liegt bei 37 g Öl pro 100 g Pigment. Die Maßzahl für die Salzlastverminderung ist -2,7.

Beispiel 2

Wie in Beispiel 1 erfolgt der Pigmentaufbau und die Aufarbeitung.

Das bis Vervielfältigungsfaktor (VVF) 4,1 nach dem Fällverfahren aufgebaute Pigment wurde mit 58 g/l FeOOH im Penniman-Prozeß eingesetzt. Auch hier findet sich eine deutliche Verbesserung der Koloristik.

Farbwerte nach Pigmentaufbau bis VVF 12,1 durch Kombination aus Fäll- und Penniman-Verfahren (Delta VVF 4,12 gegen VVF 1):

|  | $\Delta L^*$ | $\Delta a^*$ | $\Delta b^*$ | $\Delta C^*$ | $\Delta h$ |
|---|---|---|---|---|---|
| Delta B 2 zu V 2 | +2,2 | -0,7 | +2,9 | +2,8 | +1,8 |

Die positiven Zahlenwerte für Helligkeit $\Delta L^*$ und Sättigung $\Delta C^*$ verdeutlichen die Verbesserung.

Die Ölzahl des Pigmentes liegt bei 37 g Öl pro 100 g Pigment. Die Maßzahl für die Salzlastverminderung ist -3,8.

Beispiel 3

Wie in Beispiel 1 erfolgte der Pigmentaufbau und die Aufarbeitung. Bis Vervielfältigungsfaktor 2,8 wurde das Pigment nach dem Fällverfahren aufgebaut, d.h., 39 g/l FeOOH kommen im Penniman-Prozeß zum Einsatz.

Farbwerte nach Pigmentaufbau bis VVF 11,7 (Delta VVF 2,8 gegen VVF 1):

|  | $\Delta L^*$ | $\Delta a^*$ | $\Delta b^*$ | $\Delta C^*$ | $\Delta h$ |
|---|---|---|---|---|---|
| Delta B 3 zu V 2 | +1,7 | -0,9 | +1,5 | +1,2 | +1,6 |

Die positiven Zahlenwerte für Helligkeit $\Delta L^*$ und Sättigung $\Delta C^*$ verdeutlichen die Verbesserung.

Die Ölzahl des Pigmentes liegt bei 36 g Öl pro 100 g Pigment. Die Maßzahl für die Salzlastverminderung ist -4,3.

Vergleichsbeispiel 1

Der Pigmentaufbau und die Aufarbeitung erfolgte wie in Beispiel 1. Nach dem Fällverfahren wurde aber nur bis Vervielfältigungsfaktor 1,9 verfahren, d.h., es wurden 26 g/l FeOOH im folgenden Penniman-Prozeß eingesetzt.

Es zeigt sich nahezu keine Verbesserung zum nicht nach dem Fällverfahren vervielfältigten Keim.

Farbwerte nach dem Pigmentaufbau bis VVF 12,1 durch Kombination aus Fäll- und Penniman-Verfahren (Delta VVF 1,9 gegen VVF 1):

|  | $\Delta L^*$ | $\Delta a^*$ | $\Delta b^*$ | $\Delta C^*$ | $\Delta h$ |
|---|---|---|---|---|---|
| Delta V 1 zu V 2 | +0,1 | -0,3 | +0,3 | +0,2 | +0,5 |

Die Ölzahl des Pigmentes liegt bei 42 g Öl pro 100 g Pigment. Die Maßzahl für die Salzlastverminderung ist -5,0.

Vergleichsbeispiel 2

Der Pigmentaufbau und die Aufarbeitung erfolgte nach dem Penniman-Verfahren, wie in Beispiel 1 beschrieben. Allerdings wurden 14 g/l FeOOH der wie in Beispiel 1 beschriebenen Keimsuspension eingesetzt.

Farbwerte nach dem Pigmentaufbau bis VVF 11,8 nach dem Penniman-Verfahren dienen als Bezug für die Beispiele und das Vergleichsbeispiel. Alle Deltawerte sind somit gleich Null. Der koloristische Vergleich von V 2 mit dem Handelsprodukt der Bayer AG, AC 5075, mit den hohen negativen Werten für Helligkeit $\Delta L^*$ und Sättigung $\Delta C^*$ zeigt die Notwendigkeit der kombinierten Fahrweise.

|  | $\Delta L^*$ | $\Delta a^*$ | $\Delta b^*$ | $\Delta C^*$ | $\Delta h$ |
|---|---|---|---|---|---|
| Delta AC 5075 zu V 2 | -2,5 | +0,9 | -3,0 | -2,7 | -2,0 |

Die Ölzahl des Pigmentes liegt bei 45 g Öl pro 100 g Pigment. Die Maßzahl für die Salzlastverminderung ist -5,4.

Beispiel 4

In eine mit 10 t Eisenschrott befüllten 100-m³-Bütte wurde ein nach dem Fällverfahren hergestelltes und bis Vervielfältigungsfaktor 5.2, wie in Beispiel 1 beschrieben, aufgebautes sphärolithisches Pigment DE-A 3 326 632 gegeben. Für den folgenden Aufbau nach dem Penniman-Verfahren wurden Eisen-II-sulfat (45 g/l), sphärolithisches FeOOH (50,4 g/l) und der Eisenschrott bei 85°C und 300 m³/h Luft begast. Nach dem Pigmentaufbau erfolgt die Aufarbeitung analog Beispiel 1.

Farbwerte nach dem Pigmentaufbau bis VVF 10,1 durch Kombination aus Fäll- und Penniman-Verfahren:

|  | $\Delta L^*$ | $\Delta a^*$ | $\Delta b^*$ | $\Delta C^*$ | $\Delta h$ |
|---|---|---|---|---|---|
| Delta B 4 zu V 2 | +2,6 | -0,8 | +3,2 | +2,9 | +2,2 |

Der Farbton ist, wie in Beispiel 1 bis 3 und Vergleichsbeispiel 1 gezeigt wurde, nur durch die Verfahrensvariante zu erzielen.

Die Ölzahl des Pigmentes liegt bei 33 g Öl pro 100 g Pigment. Die Maßzahl für die Salzlastverminderung ist -0,8.

Beispiel 5

In einem 100-m³-Reaktor mit 10 t Eisenschrott (C= 0,12 %) wurden 70 m³ Suspension, bestehend aus 45 g/l $FeSO_4$ und 70 g/l sphärolithischem FeOOH, gegeben. Das sphärolithische FeOOH wurde hergestellt nach DE-A 3 716 300, Beispiel 4. 62,0 m³ techn. $FeSO_4$-Lösung (c = 201,0 g $FeSO_4$/l) und 2215 l techn. $Al_2(SO_4)_3$-Lösung (c = 1,00 Mol/l) wurden unter Rühren auf 30°C geheizt. Nach dem Aufheizen wurden 9,4 m³ techn. Natronlauge (c = 9,5 Mol/l) zugepumpt und bei gleichzeitiger Steigerung der Tempertur bis auf 45°C so lange unter Rühren mit 700 m³ Luft/h oxidiert, bis der pH-Wert $\leq$ 3,8 betrug. Zu 36,0 m³ dieser Gelbkeimsuspension wurden 80,0 m³ Wasser hinzugefügt und dann auf 75°C geheizt. Nach der Aufheizung fiel der pH-Wert auf $\leq$ 3,0. Anschließend wurden bei 75°C unter Rühren und Begasung mit 700 m³ Luft/h in ca. 16 Std. 26,0 m³ Natronlauge techn. (c = 5,00 Mol/l) und 37,0 m³ techn. $FeSO_4$-Lösung (c = 201,0 g $FeSO_4$/l) so zudosiert, daß der pH-Wert in der Suspension um 0,1 bis 0,2 Einheiten pro Std. bis pH = 3,8 steigt, dann konstant 4,9 ± 0,2 betrug. Für diesen Versuch wurde die Gelbkeimsuspension nur um den Faktor 5,2 vervielfacht und dann im Penniman-Verfahren eingesetzt.

Bei 85°C und 700 m³ Luft/h erfolgte in der Pennimann-Suspension 24 h ein Pimentaufbau. Ohne Begasung wurde die Suspension 16 Std. gerührt. Proben nach 8 und 16 Std. zeigen die koloristische Verbesserung der Pigmente an.

| Probe | g/l-$FeSO_4$ der Lö-sung | % FeO im Pig-ment | $\Delta L*$ | $\Delta a*$ | $\Delta b*$ | $\Delta C*$ |
|---|---|---|---|---|---|---|
| ohne Rühren | 37 | 0,26 | 0 | 0 | 0 | 0 |
| nach 3 h | 42 | 0,04 | 0,3 | 0,3 | 0,5 | 0,6 |
| nach 6 h | 48 | 0,03 | 0,7 | -0,1 | 0,7 | 0,7 |

**Patentansprüche**

1. Verfahren zur Herstellung von Eisenoxidgelb-Pigmenten mit niedrigem Silking-Effekt, wobei man die Keimbildung von nadelförmigen $\alpha$-FeOOH-Gelbpigmenten in Gegenwart von Verbindungen der Elemente B, Al, Ga, Si, Ge, Sn oder Pb in Mengen von 0,05 bis 10 Gew.-%, berechnet als 3- oder 4-wertige Oxide, und bezogen auf das bei der Keimbildung ausgefällte $\alpha$-FeOOH, vornimmt und auf dem Gelbkeim ein Eisenoxidgelb-Pigment aufwachsen läßt, dadurch gekennzeichnet, daß das Aufwachsen bis zu einem Vervielfältigungsfaktor (VVF) von 2,5 bis 7, vorzugsweise von 4 bis 6, zunächst nach dem Fällverfahren und anschließend nach dem Penniman-Verfahren durchgeführt wird.

2. Verfahren gemäß Anspruch 1, dadurch gekennzeichnet, daß bei Beginn des Penniman-Verfahrens 10 bis 100 g/l FeOOH, vorzugsweise 30 bis 80 g/l FeOOH, das nach dem Fällverfahren erhalten wurde, vorliegen.

3. Verfahren gemäß einem der Ansprüche 1 oder 2, dadurch gekennzeichnet, daß die Konzentration an $FeSO_4$ während des Aufwachsens beim Penniman-Verfahrens 10 bis 80 g/l $FeSO_4$, bevorzugt 20 bis 60 g/l, beträgt.

4. Verfahren gemäß einem oder mehrerer der Ansprüche 1 bis 3, dadurch gekennzeichnet, daß nach Abschluß des Penniman-Verfahrens die Reaktionssuspension ohne Begasung bei der Reaktionstemperatur 0,5 bis 20 h, bevorzugt 1 bis 10 h, gerührt wird.

## Claims

1. A process for the production of low-silking iron oxide yellow pigments, in which the nucleation of acicular $\alpha$-FeOOH yellow pigments is carried out in the presence of compounds of the elements B, Al, Ga, Si, Ge, Sn or Pb in quantities of 0.05 to 10% by weight, expressed as 3- or 4-valent oxides and based on the $\alpha$-FeOOH precipitated during nucleation, and an iron oxide yellow pigment is grown on the yellow nucleus, characterized in that growth is carried out to a multiplication factor (MF) of 2.5 to 7 and preferably 4 to 6 first by the precipitation process and then by the Penniman process.

2. A process as claimed in claim 1, characterized in that 10 to 100 g/l FeOOH and preferably 30 to 80 g/l FeOOH obtained by the precipitation process are present at the beginning of the Penniman process.

3. A process as claimed in claim 1 or 2, characterized in that the concentration of $FeSO_4$ during growth by the Penniman process is from 10 to 80 g/l $FeSO_4$ and preferably from 20 to 60 g/l $FeSO_4$.

4. A process as claimed in one or more of claims 1 to 3, characterized in that, on completion of the Penniman process, the reaction suspension is stirred for 0.5 to 20 h and preferably from 1 to 10 h at the reaction temperature without aeration.

## Revendications

1. Procédé de production de pigments d'oxyde de fer jaune à faible effet de silking, dans lequel on effectue la formation de germes de pigments jaunes aciculaires de $\alpha$-FeOOH en présence de composés des éléments B, Al, Ga, Si, Ge, Sn ou Pb en quantités de 0,05 à 10 % en poids, calculées en termes d'oxydes trivalents ou tétravalents et par rapport à l'$\alpha$-FeOOH précipité lors de la formation de germes et on fait croître un pigment d'oxyde de fer jaune sur le germe de jaune, caractérisé en ce qu'on conduit la croissance jusqu'à un facteur de multiplication (FM) de 2,5 à 7, de préférence de 4 à 6, d'abord par le procédé de précipitation puis par le procédé Penniman.

2. Procédé suivant la revendication 1, caractérisé en ce que 10 à 100 g/l de FeOOH, de préférence 30 à 80 g/l de FeOOH qui a été obtenu par le procédé de précipitation, sont présents au début du procédé Penniman.

3. Procédé suivant l'une des revendications 1 ou 2, caractérisé en ce que la concentration en $FeSO_4$ pendant la croissance lors du procédé Penniman s'élève à 10-80 g/l de $FeSO_4$, de préférence à 20-60 g/l.

4. Procédé suivant une ou plusieurs des revendications 1 à 3, caractérisé en ce que la suspension réactionnelle est agitée à la température de réaction pendant 0,5 à 20 heures, de préférence 1 à 10 heures, après la fin du procédé Penniman.

FIG.1